# EUROPÄISCHE PATENTSCHRIFT

(11) **EP 1 882 537 B1**
(45) Veröffentlichungstag und Bekanntmachung des Hinweises auf die Patenterteilung: **03.09.2008**
(21) Anmeldenummer: 06015471.3
(22) Anmeldetag: 25.07.2006
(51) Int. Cl.: B23B 31/30

(54) **Hydraulische Dehnspanneinrichtung**
Hydraulic expansion chucking device
Dispositif de serrage expansible hydraulique

(43) Veröffentlichungstag der Anmeldung: 30.01.2008
(73) Patentinhaber: Schunk GmbH & Co. KG Spann- und Greiftechnik, 74348 Lauffen (DE)
(72) Erfinder: Retzbach, Thomas, 74257 Bönnigheim (DE); Sigmund, Rainer, 74348 Lauffen (DE); Korte, René, 74189 Weinsberg (DE)
(74) Vertreter: Paul, Dieter-Alfred

(56) Entgegenhaltungen:
- EP-A1- 1 090 704
- EP-A2- 0 074 332
- DE-U1- 8 807 205

## Beschreibung

Die Erfindung betrifft eine hydraulische Dehnspanneinrichtung nach dem Oberbegriff von Anspruch 1.

Hydraulische Dehnspanneinrichtungen dieser Art sind beispielsweise aus der WO 2005/044491 A1 bekannt und werden in erster Linie eingesetzt, um Werkzeuge oder Bauteile an der Arbeitsspindel einer entsprechenden Werkzeugmaschine zu fixieren. Man unterscheidet grundsätzlich zwei Arten von Dehnspanneinrichtungen, nämlich zum einen sogenannte Spanndorne, bei denen die Dehnbüchse den Grundkörper umgibt und sich bei einer Beaufschlagung des Druckraums zum Fixieren an einem Bauteil radial nach außen aufweitet, und zum anderen Spannfutter, bei denen die Dehnbüchse in den Grundkörper eingesetzt ist und zum Spannen einer Welle oder eines Schaftes radial nach innen verformt wird. Im übrigen können die Dehnspanneinrichtungen, wie aus der WO 2005/044491 A1 bekannt, als separate Bauteile ausgebildet sein, welche an der Arbeitsspindel der Werkzeugmaschine fixiert werden, die Dehnspanneinrichtungen können alternativ aber auch unmittelbar in beispielsweise die Arbeitsspindel integriert sein.

Bei einigen bekannten hydraulischen Dehnspanneinrichtungen ist der Druckraum über einen Hydraulikmittelzuführkanal mit einem Zylinderraum verbunden, in dem ein Kolben verschiebbar gehalten ist. Das offene Ende des Zylinderraums ist durch eine Spannschraube verschlossen, welche mit dem Kolben in Kontakt steht. Wenn der Druck innerhalb der Druckkammer erhöht werden soll, um die Dehnbüchse zum Spannen eines Bauteils zu verformen, wird die Spannschraube in den Zylinderraum hinein gedreht, so dass der Kolben ebenfalls nach innen verschoben wird mit der Folge, dass das Hydraulikmittel, mit welchem der Druckraum, die Hydraulikmittelzuführleitung und der Zylinderraum gefüllt sind, in Richtung des Druckraums verdrängt wird. Dabei ist der Zylinderraum gegen einen Austritt von Hydraulikmittel durch einen Dichtungsstopfen abgedichtet, welcher an der in den Zylinderraum weisenden Stirnfläche des Kolbens vorgesehen ist. Diese Anordnung wird als störend empfunden, weil die Dichtung stets zusammen mit dem Kolben bewegt werden muss und außerdem auch die Positionierung des Dichtungsstopfens an der Kolbenvorderseite viel Platz erfordert.

Aus der deutschen Anmeldung DE 88 07 205 U1 ist eine hydraulische Dehnspanneinrichtung mit einem Grundkörper und einer Dehnbüchse bekannt, die unter Bildung einer Druckkammer in den Grundkörper eingesetzt ist oder diesen umgibt, wobei in der Druckkammer ein Hydraulikmittelzuführkanal mündet, der an seiner von der Druckkammer fernen Seite als ein Zylinderraum ausgebildet ist, welcher durch eine Spannschraube verschlossen ist, wobei die Spannschraube mit einem in dem Zylinderraum verschiebbar angeordneten Kolben wirkverbunden ist, so dass der Kolben durch Drehung der Spannschraube unter Erhöhung des Drucks in der Druckkammer und elastischer Verformung der Dehnbüchse nach innen verschiebbar ist und wobei in dem Zylinderraum ein Einsatzelement gehalten ist, wobei zwischen der in den Grundkörper weisenden Stirnfläche des Einsatzelements und dem Grundkörper eine Ringnut ausgebildet ist, in welche ein Dichtungsring eingesetzt ist, der den zwischen dem Kolben und dem Grundkörper gebildeten Ringspalt abdichtet und die Spannschraube in den Grundkörper eingeschraubt ist. Die Druckschrift spezifiziert nicht, dass das Einsatzelement an seinem Außenumfang wenigstens eine zweite Ringnut aufweist, in welcher ein Lötmaterial untergebracht ist, und dass das Einsatzelement durch Hochtemperaturlöten in dem Grundkörper befestigt ist sowie dass in das Einsatzelement die Spannschraube eingeschraubt ist.

Die europäische Patentanmeldung EP-A2-0 074 332 beschreibt eine Dehnspannvorrichtung zum lösbaren Verbinden zweier Teile, die z.B. ein Dehnspannfutter oder ein Dehnspanndorn für eine Werkzeugmaschine sein können, wobei zur Erzeugung des Spanndrucks ein schraubenbetätigter Druckkolben vorgesehen ist, der in einem Einsatzteil untergebracht ist, welcher seinerseits in eine radiale Gewindebohrung im Grundkörper eingeschraubt und durch einen Dichtring abgedichtet ist. Die Befestigung des Einsatzelements, das an seinem Außenumfang wenigstens eine Ringnut aufweist, in welcher ein Lötmaterial untergebracht ist, und wobei das Einsatzelement durch Hochtemperaturlöten in dem Grundkörper befestigt ist, wird in dieser Druckschrift nicht offenbart.

Die europäische Patentanmeldung EP-A1-1 090 704 offenbart ein Hydrodehnspannfutter, bei dem zum Spannen ein Kolben dient, der in einer Hydraulikzylinderbohrung über eine Spannschraube verstellbar ist, und wobei der Kolben aus einem Druckstück mit einem angeformten dünneren Dorn besteht, auf dem ein Dichtkörper aus gummielastischem Material, Kunststoff oder dergleichen sitzt. Dadurch ist der Hydraulikzylinder direkt in dem Grundkörper gebildet, weshalb das in der vorliegenden Erfindung beschriebene Verlöten des Einsatzelementes in dem Grundkörper nicht Teil der Offenbarung dieser europäischen Patentanmeldung ist.

Vor diesem Hintergrund liegt der vorliegenden Erfindung die Aufgabe zugrunde, eine hydraulische Dehnspanneinrichtung der eingangs genannten Art so auszugestalten, dass der Spannmechanismus zur Beaufschlagung des Druckraums einfach und platzsparend ist.

Gemäß der vorliegenden Erfindung wird diese Aufgabe durch die Merkmale von Anspruch 1 gelöst.

Die fixierung des Einsatzelementes in dem Zylinderraum durch Hochtemperaturlöten hat den Vorteil, dass eine permanente und fluiddichte Verbindung zwischen dem Einsatzelement und dem Grundkörper auf einfache Weise hergestellt werden kann, indem der Grundkörper mit dem eingeschobenen Einsatzelement in einem Ofen plaziert und erhitzt wird, bis das Lötmaterial in der Ringnut aufschmilzt. Hierbei wird der Dichtungsring nach dem Hochtemperaturlöten in die erste Ringnut eingesetzt, damit er nicht durch die hohen Temperaturen beschädigt wird. Bei anderen Verbindungsverfahren ist es auch möglich, den Dichtungsring vor dem Einschieben des Einsatzelements in die erste Ringnut einzulegen.

Dabei ist es zweckmäßig, die Ringnut für das Material an dem in den Grundkörper weisenden Endbereich des Einsatzelementes auszubilden.

Dadurch, dass gemäß der vorliegenden Erfindung keine Relativbewegung zwischen dem Dichtungselement und dem Führungsabschnitt des Zylinderraums stattfindet, können der Führungsabschnitt und der Kolben nach Art einer Gleitpassung zueinander dimensioniert sein. Hierzu ist der Kolben zweckmäßigerweise als ein Wälzkörper, wie er in Zylinderrollenlagern verwendung findet, ausgebildet, und der Führungsabschnitt entsprechend fein bearbeitet.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine hydraulische Dehnspanneinrichtung gemäß der vorliegenden Erfindung im Längsschnitt,
- Figur 2: die Dehnspanneinrichtung aus der Figur 1 im Schnitt entlang der Linie B-B in der Figur 1, und
- Figur 3: den Ausschnitt A aus der Figur 2.

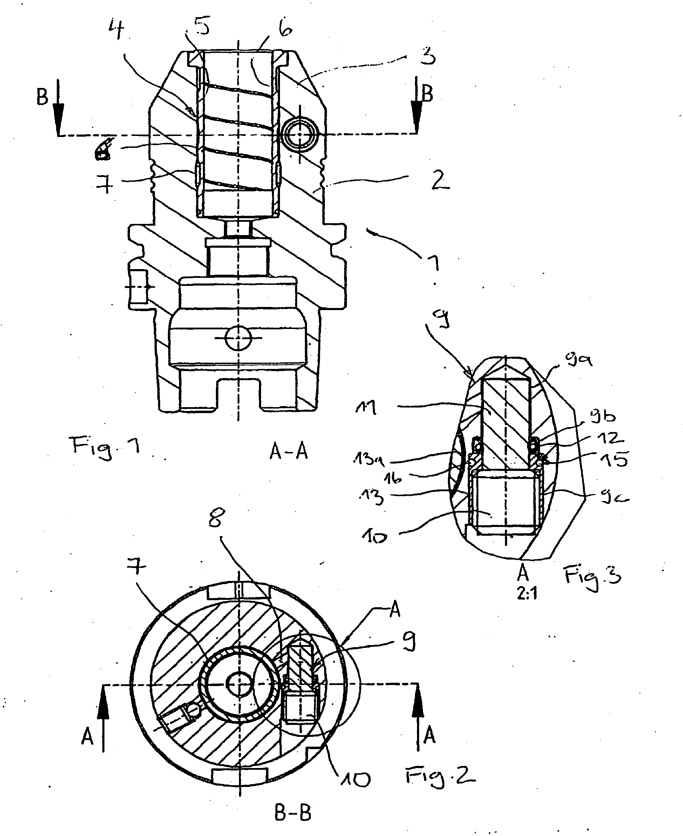

In den Figuren 1 bis 3 ist eine Ausführungsform einer hydraulischen Dehnspanneinrichtung 1 gemäß der vorliegenden Erfindung dargestellt. Die hydraulische Dehnspanneinrichtung 1, die hier in der Form eines Dehnspannfutters ausgebildet ist, besitzt einen Grundkörper 2 aus einem formsteifen Material, der an seinem in der Figur 1 unteren Endbereich in an sich bekannter Weise einen Befestigungskonus 2a zur Einspannung an einer drehangetriebenen Arbeitsspindel einer Werkzeugmaschine aufweist. An dem anderen Ende des Grundkörpers 2 ist ein Anschlussschaft 3 mit einer zentralen Axialbohrung 4 vorgesehen, in die eine Dehnbüchse 5 eingesetzt ist. Die Dehnbüchse 5 bildet dabei eine Aufnahme 6, in die ein zylindrischer Schaft eines Werkzeugs wie beispielsweise eines Bohrers oder eines Fräsers eingeschoben und fixiert werden kann.

Zwischen der Dehnbüchse 5 und dem Grundkörper 2 ist ein eine Druckkammer 7 bildender Ringraum ausgebildet, welcher die Aufnahme 6 umgibt und koaxial zu dieser ausgerichtet ist. Die Druckkammer 7, deren axiale Länge etwa dem erforderlichen Spannbereich des Dehnspannfutters 1 entspricht, wird zu Aufnahme 6 hin von der relativ schmalen Wandung 8 der Dehnbüchse 5 und radial nach außen von der Wandung des Grundkörpers 2, deren Wandstärke um ein Mehrfaches größer als die Wandstärke der Innenwand ist, begrenzt.

Die Druckkammer 7 steht über einen Hydraulikmittelzuführkanal 8 mit einem im Grundkörper 2 ausgebildeten Zylinderraum 9 in Verbindung, welcher an seiner von der Druckkammer 7 fernen Seite durch eine Spannschraube 10 verschlossen ist, die mit einem im Zylinderraum 9 verschiebbar gehaltenen Kolben 11 stirnseitig in Kontakt steht.

Die Druckkammer 7, der Hydraulikmittelzuführkanal 8 und der Zylinderraum 9 sind vollständig mit einem Hydraulikmittel gefüllt, welches unter Druckerhöhung in Richtung der Druckkammer 7 verdrängt wird, wenn die Spannschraube 10 in den Grundkörper 2 eingedreht und damit der Kolben 11 in den Zylinderraum 9 hinein gedrückt wird.

wie insbesondere die Figur 3 gut erkennen lässt, besitzt der Zylinderraum 9 drei axiale Abschnitte 9a, 9b, 9c mit von innen nach außen zunehmendem Durchmesser. Der innen liegende, erste axiale Zylinderraumabschnitt 9a ist als Führungsabschnitt für den Kolben 11 ausgebildet und besitzt demgemäß einen dem Kolbendurchmesser entsprechenden Durchmesser. Die Durchmesser sind nach Art einer Gleitpaarung dimensioniert, wobei als Kolben 11 der Einfachheit halber ein Wälzkörper beispielsweise eines Radialrollenlagers verwendet wird. An den Führungsabschnitt 9a schließt sich ein zweiter Zylinderraumabschnitt 9b an, der einen etwas größeren Durchmesser als der Führungsabschnitt 9a besitzt und einen Ringraum bildet, in den ein Dichtungsring 12 beispielsweise in der Form eines O-Rings eingelegt werden kann. Der äußere, dritte Abschnitt 9c des Zylinderraums 9 dient zur Aufnahme eines hülsenartig ausgebildeten Einsatzelements 13 mit einem Innengewinde 13a, in welches die Spannschraube 10 eingeschraubt ist. Das Einsatzelement 13 liegt, wie in der Figur 2 gut erkennbar ist, an einer Schulter 14 an, welche zwischen dem zweiten und dem dritten Zylinderraumabschnitt 9b, 9c gebildet wird, und besitzt an ihrem in den Grundkörper 2 weisenden Endabschnitt 13a einen dem Kolbendurchmesser entsprechenden Durchmesser. Auf diese Weise wird der zweite axiale Abschnitt 9b an seinem nach außen weisenden Ende durch das Einsatzelement 13 unter der Bildung einer ersten Ringnut 15 für die Aufnahme des Dichtungselements 12 geschlossen.

Das Einsatzelement 13 ist in dem Grundkörper 2 durch Hochtemperaturlöten befestigt. Hierzu weist das Einsatzelement 13 an seinem in den Grundkörper 2 ragenden Endbereich 13a außenseitig eine zweite Ringnut 16 auf, in welcher ein Lötmaterial in der Form eines CU-Lötdrahtes untergebracht ist. Bei der Fertigung wird das Einsatzelement 13 in den Zylinderraum 9 eingeschoben, bis es an der zwischen dem zweiten und dem dritten Zylinderraumabschnitt 9b, 9c gebildeten Schulter 14 anliegt, und dann in einem Ofen erhitzt, so dass das Lötmaterial 15 schmilzt. Erst nach dem Hochtemperaturlöten wird der Dichtungsring 12 durch das Einsatzelement 13 in die erste Ringnut 15 eingebracht.

## Patentansprüche

1. Hydraulische Dehnspanneinrichtung mit einem Grund-körper (2) und einer Dehnbüchse (5), die unter Bildung einer Druckkammer (7) in den Grundkörper (2) eingesetzt ist oder diesen umgibt, wobei in die Druckkammer (7) ein Hydraulikmittelzuführkanal (8) mündet, der an seiner von der Druckkammer (7) fernen Seite als ein Zylinderraum (9) ausgebildet ist, welcher durch eine Spannschraube (10) verschlossen ist, wobei die Spannschraube (10) mit einem in dem Zylinderraum (9) verschiebbar angeordneten Kolben (11) wirkverbunden ist, so dass der Kolben (11) durch Drehung der Spannschraube (10) unter Erhöhung des Drucks in der Druckkammer (7) und elastischer Verformung, der Dehnbüchse (5) nach innen verschiebbar ist, wobei in dem Zylinderraum (9) ein Einsatzelement (13) gehalten ist, und zwischen der in den Grundkörper (2) weisenden Stirnfläche des Einsatzelements (13) und dem Grundkörper (2) eine erste Ringnut (15) ausgebildet ist, in welche ein Dichtungsring (12) eingesetzt oder einsetzbar ist, der den zwischen dem Kolben (11) und dem Grundkörper (2) gebilde-ten Ringspalt abdichtet, **dadurch gekennzeichnet, dass** das Einsatzelement (13) an seinem Außenumfang wenigstens eine zweite Ringnut (16) aufweist, in welcher ein Lötmaterial untergebracht ist, und das Einsatzelement (13) durch Hochtemperaturlöten in dem Grundkörper (2) befestigt ist, und dass in das Einsatzelement die Spannschraube (10), eingeschraubt ist.

2. Hydraulische Dehnspanneinrichtung nach Anspruch 2, **dadurch gekennzeichnet, dass** die zweite Ringnut (16) für das Lötmaterial an dem in den Grundkörper (2) weisenden Endbereich (13a) des Einsatzelementes (13) ausgebildet ist.

3. Hydraulische Dehnspanneinrichtung nach Anspruch 2 oder 3, **dadurch gekennzeichnet, dass** das Lötmaterial ein CU-Lötdraht (15) ist.

4. Hydraulische Dehnspanneinrichtung nach einem der vorherigen Ansprüche, **dadurch gekennzeichnet, dass** der Kolben (9) ein Wälzkörper ist.

## Claims

1. Hydraulic expansion chucking device comprising a base body (2) and an expansion sleeve (5), which is inserted into the base body (2) or surrounds the same forming a pressure chamber (7), wherein a hydraulic medium supply channel (8) discharges into the pressure chamber (7), which at its side facing away from the pressure chamber (7) is formed as a cylinder space (9) closed by tension screw (10), wherein the tension screw (10) is operatively connected with a piston slideably arranged in the cylinder space (9), so that the piston can be slideably moved inwardly by turning the tension screw (10) for increasing the pressure in the pressure chamber (7) and elastically deforming the expansion sleeve (5), wherein an insert element (13) is held in the cylinder space (9) and a first annular groove (12) is formed between the face of the insert element (13) directed into the base body (2) and the base body (2), into which a sealing (12) is inserted or insertable, which seals off the annular gap between the piston (11) and the base body (2), **characterized in that** the insert element (13) has formed at its outer circumference at least a second annular groove (16), in which a soldering material is accommodated, and the insert element (13) is fixed in the base body (2) by high temperature soldering, and that the tension screw (10) is screwed into the insert element.

2. Hydraulic expansion chucking device according to claim 1, **characterized in that** the second annular groove (16) for the soldering material is formed at the end portion (13a) of the insert element (13) directed into the base body (2).

3. Hydraulic expansion chucking device according to claim 2 or 3, **characterized in that** the soldering material is a copper solder wire (15).

4. Hydraulic expansion chucking device according to one of the preceding claims, **characterized in that** the piston (9) is a roller body.

## Revendications

1. Dispositif de serrage expansible hydraulique avec un corps principal (2) et une douille expansible (5), qui sous formation d'une chambre hyperbare (7), est disposée dans le corps principal (2) ou bien entoure ce dernier, étant donné que dans la chambre hyperbare (7), se dégorge un canal d'alimentation (8) pour un agent hydraulique, qui forme une chambre cylindrique (9) se fermant à l'aide d'une vis de serrage (10), à son extrémité éloignée du coté de la chambre hyperbare(7), étant donnée que, la vise de serrage (10) est en liaison active avec un piston (11) mobile disposé dans la chambre cylindrique (9), de sorte que le piston (11) par rotation de la vis de serrage (10) sous l'action d'une augmentation de la pression dans la chambre hyperbare (7) et la déformation élastique de la douille expansible (5), est déplacé vers l'intérieur, ceci étant donné que, un élément d'insertion (13) est maintenu dans la chambre cylindrique (9), une première rainure annulaire (15) est constituée entre la face frontale de l'élément d'insertion (13) indiquant vers le corps principal (2) et le corps principal (2), et que dans cette dernière, une bague d'étanchéité (12) est installée reps. insérable permettant ainsi de colmater la fente annulaire formée entre le piston (11) et le corps principal (2), étant donné que, **caractérisé en ce que** l'élément d'insertion (13) présente sur sa périphérie externe, au moins une deuxième rainure annulaire (16), dans laquelle est placé un matériel d'apport de brasage, et **en ce que** l'élément d'insertion (13) est fixé dans le corps principal (2) par brasage à haute température, et **en ce que** la vis de serrage (10) est visée dans l'élément d'insertion.

2. Dispositif de serrage expansible hydraulique selon revendication 2, **caractérisé en ce que** la deuxième rainure annulaire (16) pour le matériel d'apport de brassage est formée au niveau de l'extrémité finale (13a) de l'élément d'insertion (13), dirigée vers le corps principal (2).

3. Dispositif de serrage expansible hydraulique selon revendication 2 ou 3, **caractérisé en ce que** le matériel d'apport de brassage est un fil à souder CU (15).

4. Dispositif de serrage expansible hydraulique selon l'une des revendications préalables, **caractérisé en ce que** le piston (9) est un corps de roulement.
